# EUROPÄISCHE PATENTANMELDUNG

(11) **EP 3 700 046 A1**
(43) Veröffentlichungstag der Anmeldung: **26.08.2020**
(21) Anmeldenummer: 20153757.8
(22) Anmeldetag: 27.01.2020
(51) Int. Cl.: H02J 7/00

(54) **HAUSHALTSGERÄT, UMFASSEND EINE ENERGIESPEICHERAUFNAHME ZUR AUFNAHME EINES WECHSELBAREN ENERGIESPEICHERS, UND VERFAHREN FÜR DESSEN BETRIEB**

(30) Priorität: 25.02.2019 DE 102019104637
(71) Anmelder: Miele & Cie. KG, 33332 Gütersloh (DE)
(72) Erfinder: Windhövel, Sebastian, 59302 Oelde-Stromberg (DE); Walfort, Dennis, 33604 Bielefeld (DE)

(57) **Zusammenfassung**

Die Erfindung betrifft ein Haushaltsgerät (2), umfassend eine Energiespeicheraufnahme (4) zur Aufnahme eines wechselbaren Energiespeichers (6), mindestens eine mit einem in die Energiespeicheraufnahme (4) eingesetzten Eigen-Energiespeicher (6) energieübertragend verbundene elektrische Vorrichtung (8, 9) zur Durchführung einer Haushaltsgerätefunktion und eine Steuerung (10) zur Ansteuerung der elektrischen Vorrichtung (8, 9) zur Durchführung der Haushaltsgerätefunktion, wobei die Steuerung (10) mit einem in die Energiespeicheraufnahme (4) eingesetzten Energiespeicher (6) und der elektrischen Vorrichtung (8, 9) jeweils in Signalübertragungsverbindung steht, dadurch gekennzeichnet, dass die Steuerung (10) derart ausgebildet und eingerichtet ist, dass mittels der Steuerung (10) ein in die Energiespeicheraufnahme (4) eingesetzter Energiespeicher (6) automatisch als der Eigen-Energiespeicher (6) oder als ein Fremd-Energiespeicher erkennbar ist und in Abhängigkeit dieser Erkennung die mindestens eine elektrische Vorrichtung (8, 9) mittels der Steuerung (10) zur Durchführung der mindestens einen Haushaltsgerätefunktion ansteuerbar ist.

Ferner betrifft die Erfindung ein Verfahren für den Betrieb des erfindungsgemäßen Haushaltsgeräts (2).

## Beschreibung

Die Erfindung betrifft ein Haushaltsgerät der im Oberbegriff des Patentanspruchs 1 genannten Art sowie ein Verfahren für dessen Betrieb.

Die Druckschrift US 2010088843 A1 betrifft batteriebetriebene Reinigungsgeräte, die ein austauschbares Batteriepack mit Hardware und Software zum Identifizieren gegenüber sowie Verbinden und Kommunizieren mit den Reinigungsgeräten umfassen.

Die Druckschrift US 2015145444 A1 betrifft ein Reinigungsgerät mit einem Motor und einer Batterieaufnahme für ein Batteriepack. Der Motorcontroller kann von dem Batteriecontroller einen ersten oder zweiten Datentyp empfangen. Der Motor wird beim Empfang des ersten Datentyps mit einer ersten Drehzahl und beim Empfang des zweiten Datentyps mit einer zweiten Drehzahl betrieben.

Die Druckschrift US 2008059816 A1 betrifft eine Stromversorgungseinrichtung für batteriebetriebene Geräte, mit der aufladbare Batterien geladen werden können. Bei einer Erkennung, dass eine aufladbare Batterie vom selben Hersteller stammt wie die Stromversorgungseinrichtung, können erweiterte oder alternative Funktionen verfügbar gemacht werden. Derartige Haushaltsgeräte und Verfahren für deren Betrieb sind aus dem Stand der Technik in einer Vielzahl von Ausführungsformen bekannt. Diese bekannten Haushaltsgeräte umfassen eine Energiespeicheraufnahme zur Aufnahme eines wechselbaren Energiespeichers, einen in die Energiespeicheraufnahme einsetzbaren Energiespeicher zur Speicherung von elektrischer Energie, mindestens eine mit dem in die Energiespeicheraufnahme eingesetzten Energiespeicher energieübertragend verbundene elektrische Vorrichtung zur Durchführung mindestens einer Haushaltsgerätefunktion und eine Steuerung zur Ansteuerung der elektrischen Vorrichtung zur Durchführung der Haushaltsgerätefunktion, wobei die Steuerung mit einem in die Energiespeicheraufnahme eingesetzten Energiespeicher und der elektrischen Vorrichtung jeweils in Signalübertragungsverbindung steht.

Es ist zu unterscheiden zwischen Energiespeichern, die vom Hersteller des Haushaltsgeräts vorgesehen und/oder durch den Hersteller des Haushaltsgeräts für den Betrieb mit dem Haushaltsgerät autorisiert sind, und Energiespeichern, bei denen dies nicht der Fall ist. Erstere sollen im Folgenden als "Eigen-Energiespeicher" bezeichnet werden, wohingegen letztere als "Fremd-Energiespeicher" bezeichnet werden. Ein Hersteller von Haushaltsgeräten kann jedoch nur für Eigen-Energiespeicher, die hinsichtlich ihrer Eigenschaften - etwa dem Lade- und Entladeverhalten und der Temperaturentwicklung - mit dem damit zu betreibenden Haushaltsgerät abgestimmt sind, die sichere Funktion des Haushaltsgeräts sicherstellen. Für Fremd-Energiespeicher kann dies vom Hersteller des Haushaltsgeräts hingegen nicht sichergestellt werden, da er auf die Eigenschaften eines von einem Benutzer wechselbaren Fremd-Energiespeichers keinen Einfluss hat.

Der Erfindung stellt sich somit das Problem, ein Haushaltsgerät mit einer Energiespeicheraufnahme zur Aufnahme eines wechselbaren Energiespeichers und ein Verfahren für dessen Betrieb anzugeben, bei denen der sichere Betrieb des Haushaltsgeräts bei der Durchführung der mindestens einen Haushaltsgerätefunktion gewährleistet ist.

Erfindungsgemäß wird dieses Problem durch ein Haushaltsgerät mit den Merkmalen des Patentanspruchs 1 gelöst. Ferner wird dieses Problem durch ein Verfahren für ein Haushaltsgerät mit den Merkmalen des Patentanspruchs 4 gelöst.

Der mit der Erfindung erreichbare Vorteil besteht insbesondere darin, dass der sichere Betrieb des Haushaltsgeräts bei der Durchführung der mindestens einen Haushaltsgerätefunktion gewährleistet ist. Grundsätzlich ist es denkbar, dass in die Energiespeicheraufnahme des Haushaltsgeräts ein beliebiger Energiespeicher, also auch ein nicht zu dem Haushaltsgerät passender Fremd-Energiespeicher einsetzbar ist. Hierdurch kann der sichere Betrieb des Haushaltsgeräts bei der Durchführung der mindestens einen Haushaltsgerätefunktion des Haushaltsgeräts gefährdet sein. Beispielsweise ist es möglich, dass das Haushaltsgerät aufgrund des Einsetzens eines nicht zu dem Haushaltsgerät passenden Fremd-Energiespeichers in Brand gerät oder sogar explodiert. Um derartige Sicherheitsrisiken und im allgemeinen eine Beschädigung des Haushaltsgeräts oder eine Verletzung der das Haushaltsgerät bedienenden Benutzer wirksam zu verhindern, ist es bei dem erfindungsgemäßen Haushaltsgerät vorgesehen, dass die Steuerung derart ausgebildet und eingerichtet ist, dass mittels der Steuerung der in die Energiespeicheraufnahme eingesetzte Energiespeicher automatisch als ein Eigen-Energiespeicher oder als ein Fremd-Energiespeicher erkennbar ist und in Abhängigkeit dieser Erkennung die mindestens eine elektrische Vorrichtung mittels der Steuerung zur Durchführung der mindestens einen Haushaltsgerätefunktion ansteuerbar ist. Analoges gilt für das erfindungsgemäße Verfahren. Entsprechend ist durch die Erfindung eine ordnungsgemäße Funktion des erfindungsgemäßen Haushaltsgeräts und damit ein sicherer Betrieb des erfindungsgemäßen Haushaltsgeräts gewährleistet.

Bei dem erfindungsgemäßen Haushaltsgerät kann es sich um jedwede Art von Haushaltsgerät handeln. Rein exemplarisch seien hier lediglich akkubetriebene Staubsauger genannt.

Grundsätzlich ist das Haushaltsgerät nach Art, Funktionsweise, Dimensionierung, Material und Form in weiten geeigneten Grenzen frei wählbar. Dies gilt auch für den wechselbaren Eigen-Energiespeicher sowie die automatische Erkennung eines in die Energiespeicheraufnahme eingesetzten Energiespeichers als ein Eigen-Energiespeicher des Haushaltsgeräts. Eine vorteilhafte Weiterbildung des erfindungsgemäßen Haushaltsgeräts sieht vor, dass ein Eigen-Energiespeicher eine Energiespeicherelektronik aufweist, wobei die Steuerung und die Energiespeicherelektronik derart aufeinander abgestimmt ausgebildet und eingerichtet sind, dass die Erkennung eines Eigen-Energiespeichers in Abhängigkeit einer Signalübertragung zwischen der Energiespeicherelektronik und der Steuerung erfolgt. Hierdurch ist das erfindungsgemäße Haushaltsgerät auf konstruktiv und schaltungstechnisch einfache Weise realisiert, da übliche Energiespeicher für Haushaltsgeräte in der Regel ein Energiespeichermanagementsystem und damit eine Energiespeicherelektronik aufweisen. Diese vorteilhafte Weiterbildung des erfindungsgemäßen Haushaltsgeräts macht sich diesen Umstand zunutze und verwendet das vorhandene Energiespeichermanagementsystem, also die vorhandene Energiespeicherelektronik, eines Eigen-Energiespeichers für dessen vorgenannte automatische Erkennung.

Gleiches gilt für eine vorteilhafte Weiterbildung des erfindungsgemäßen Verfahrens, wonach ein Eigen-Energiespeicher eine Energiespeicherelektronik aufweist und die Erkennung eines Eigen-Energiespeichers in Abhängigkeit einer Signalübertragung zwischen der Energiespeicherelektronik und der Steuerung erfolgt.

Wie oben bereits ausgeführt, ist ein Eigen-Energiespeicher in weiten geeigneten Grenzen frei wählbar. Eine vorteilhafte Weiterbildung des erfindungsgemäßen Haushaltsgeräts sieht vor, dass ein Eigen-Energiespeicher als ein wiederaufladbarer Energiespeicher ausgebildet ist. Auf diese Weise ist ein Eigen-Energiespeicher mehrfach verwendbar. Entsprechend ist die Umweltverträglichkeit des erfindungsgemäßen Haushaltsgeräts verbessert. Selbstverständlich sind auch Ausführungsformen denkbar, bei denen ein Eigen-Energiespeicher als ein nicht wiederaufladbarer Energiespeicher ausgebildet ist. In einer weiteren Ausführungsform des erfindungsgemäßen Haushaltsgeräts kann dieses zur Aufnahme von und für den Betrieb mit nicht wiederaufladbaren und wiederaufladbaren Eigen-Energiespeichern ausgebildet sein.

Grundsätzlich ist das Verfahren für den Betrieb des erfindungsgemäßen Haushaltsgeräts in weiten geeigneten Grenzen frei wählbar. Eine vorteilhafte Weiterbildung des erfindungsgemäßen Verfahrens sieht vor, dass in Abhängigkeit der Erkennung des in die Energiespeicheraufnahme eingesetzten Energiespeichers als Eigen-Energiespeicher die mindestens eine elektrische Vorrichtung mittels der Steuerung in einem Normalbetriebszustand angesteuert wird. Hierdurch ist die volle Funktionsfähigkeit des erfindungsgemäßen Haushaltsgeräts bei dem in die Energiespeicheraufnahme eingesetzten Eigen-Energiespeicher ermöglicht.

Für den Fall, dass in die Energiespeicheraufnahme ein Fremd-Energiespeicher eingesetzt worden ist, sieht das erfindungsgemäße Verfahren vor, dass in Abhängigkeit der Erkennung des in die Energiespeicheraufnahme eingesetzten Energiespeichers als Fremd-Energiespeicher mindestens eine der mindestens einen elektrischen Vorrichtung mittels der Steuerung in einem Sonderbetriebszustand angesteuert wird, wobei die elektrische Vorrichtung in deren Sonderbetriebszustand die Haushaltsgerätefunktion eingeschränkt durchführt. Auf diese Weise ist, trotz in die Energiespeicheraufnahme eingesetzten Fremd-Energiespeichers, ein eingeschränkter Betrieb mindestens einer der mindestens einen Haushaltsgerätefunktion ermöglicht, Beispielsweise kann es vorgesehen sein, dass lediglich eine als Anzeigeeinheit des Haushaltsgeräts ausgebildete elektrische Vorrichtung in dem vorgenannten Fall in einem Sonderbetriebszustand betrieben wird.

Darüber hinaus sieht eine vorteilhafte Weiterbildung des erfindungsgemäßen Verfahrens vor, dass in Abhängigkeit der Erkennung des in die Energiespeicheraufnahme eingesetzten Energiespeichers als Fremd-Energiespeicher mindestens eine der mindestens einen elektrischen Vorrichtung mittels der Steuerung nicht angesteuert wird. Hierdurch ist gewährleistet, dass beispielsweise eine sicherheitskritische elektrische Vorrichtung des Haushaltsgeräts in dem vorgenannten Fall nicht betrieben werden. Dabei kann es sich beispielsweise um eine als Elektromotor ausgebildete elektrische Vorrichtung handeln, die in dem Fall, dass in die Energiespeicheraufnahme ein Fremd-Energiespeicher eingesetzt worden ist, nicht betrieben wird.

In Anlehnung an die beiden vorgenannten Beispiele kann es jedoch auch vorgesehen sein, dass lediglich eine als Anzeigeeinheit des Haushaltsgeräts ausgebildete elektrische Vorrichtung in dem vorgenannten Fall in einem Normalbetriebszustand oder einem Sonderbetriebszustand betrieben wird, während eine als Elektromotor ausgebildete elektrische Vorrichtung in dem vorgenannten Fall nicht betrieben wird.

Ein Ausführungsbeispiel der Erfindung ist in der Zeichnung rein schematisch dargestellt und wird nachfolgend näher beschrieben. Es zeigt die einzige Figur:

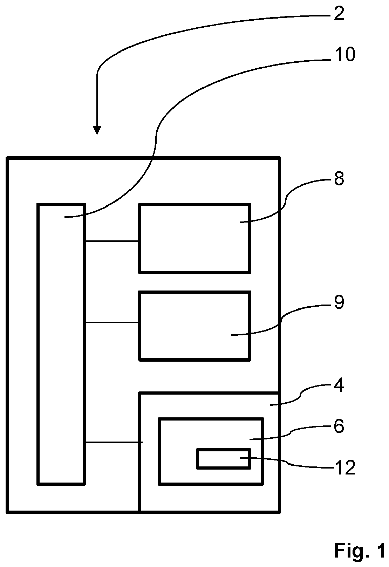

- Figur 1: ein Ausführungsbeispiel des erfindungsgemäßen Haushaltsgeräts.

In der Fig. 1 ist ein Ausführungsbeispiel des erfindungsgemäßen Haushaltsgeräts dargestellt. Das Haushaltsgerät ist als ein Staubsauger 2 ausgebildet und umfasst eine Energiespeicheraufnahme 4 zur Aufnahme eines wechselbaren Energiespeichers, einen in die Energiespeicheraufnahme 4 einsetzbaren Eigen-Energiespeicher 6 zur Speicherung von elektrischer Energie, mindestens eine mit dem in die Energiespeicheraufnahme 4 eingesetzten Eigen-Energiespeicher 6 energieübertragend verbundene elektrische Vorrichtung 8, 9 zur Durchführung mindestens einer Haushaltsgerätefunktion und eine Steuerung 10 zur Ansteuerung der elektrischen Vorrichtungen 8, 9 zur Durchführung der jeweiligen Haushaltsgerätefunktion. Der wechselbare Eigen-Energiespeicher 6 ist bei dem vorliegenden Ausführungsbeispiel als ein Akkumulator, kurz Akku, ausgebildet. Entsprechend ist der wechselbare Eigen-Energiespeicher 6 als ein wiederaufladbarer Energiespeicher ausgebildet. Die Energiespeicheraufnahme 4 ist als ein von außen zugänglicher Schacht des Staubsaugers 2 ausgebildet, der in einem geschlossenen Zustand auf dem Fachmann bekannte Weise mittels eines nicht dargestellten Deckels vor Schmutz und Flüssigkeit geschützt ist. Bei der mindestens einen Haushaltsgerätefunktion handelt es sich zum einen um eine Staubsaugfunktion des Staubsaugers 2. Für diese Staubsaugfunktion weist der Staubsauger 2 die als Sauggebläse ausgebildete elektrische Vorrichtung 8 auf. Zum anderen verfügt der Staubsauger 2 über eine als Anzeigefunktion ausgebildete Haushaltsgerätefunktion. Hierfür weist der Staubsauger 2 die als Anzeigeeinheit ausgebildete elektrische Vorrichtung 9 auf.

Die Steuerung 10 steht mit einem in die Energiespeicheraufnahme 4 eingesetzten Energiespeicher, beispielsweise dem Eigen-Energiespeicher 6, dem Sauggebläse 8 und der Anzeigeeinheit 9 jeweils in Signalübertragungsverbindung. Ferner ist die Steuerung 10 derart ausgebildet und eingerichtet, dass mittels der Steuerung 10 der in die Energiespeicheraufnahme 4 eingesetzte Energiespeicher, beispielsweise der Eigen-Energiespeicher 6, automatisch als ein Eigen-Energiespeicher 6 oder als ein Fremd-Energiespeicher erkennbar ist und in Abhängigkeit dieser Erkennung das Sauggebläse 8 und die Anzeigeeinheit 9 mittels der Steuerung 10 zur Durchführung der jeweiligen Haushaltsgerätefunktion ansteuerbar sind.

Der Eigen-Energiespeicher 6 weist eine Energiespeicherelektronik 12 auf, wobei die Steuerung 10 und die Energiespeicherelektronik 12 derart aufeinander abgestimmt ausgebildet und eingerichtet sind, dass die Erkennung des Eigen-Energiespeichers 6 in Abhängigkeit einer Signalübertragung zwischen der Energiespeicherelektronik 12 und der Steuerung 10 erfolgt.

Nachfolgend wird die Funktionsweise des erfindungsgemäßen Haushaltsgeräts sowie das erfindungsgemäße Verfahren gemäß dem vorliegenden Ausführungsbeispiel anhand der Fig. 1 näher erläutert.

Ein nicht dargestellter Benutzer setzt den Eigen-Energiespeicher 6 ordnungsgemäß in die Energiespeicheraufnahme 4 des Staubsaugers 2 ein. Mittels der Signalübertragungsverbindung zwischen der Energiespeicherelektronik 12 des Eigen-Energiespeichers 6 auf der einen Seite und der Steuerung 10 auf der anderen Seite erkennt die Steuerung 10 automatisch, dass in die Energiespeicheraufnahme 4 nicht ein Fremd-Energiespeicher, sondern der Eigen-Energiespeicher 6, also der zu dem Staubsauger 2 passende Energiespeicher, eingesetzt worden ist. Aufgrund der automatischen Erkennung des in die Energiespeicheraufnahme 4 eingesetzten Energiespeichers als den Eigen-Energiespeicher 6 werden das Sauggebläse 8 und die Anzeigeeinheit 9 des Staubsaugers 2 mittels der Steuerung 10 in einem Normalbetriebszustand angesteuert. Beispielsweise werden auf der Anzeigeeinheit 9 Betriebsparameter des Staubsaugers 2 angezeigt. Das Sauggebläse 8 wird beispielsweise in Abhängigkeit einer mittels einer nicht dargestellten Bedieneinheit des Staubsaugers 2 an dem Staubsauger 2 eingestellten Leistungsstufe betrieben.

Sollte der Benutzer im Unterschied dazu in die Energiespeicheraufnahme 4 einen nicht dargestellten Fremd-Energiespeicher, also nicht den zu dem Staubsauger 2 passenden Eigen-Energiespeicher 6, eingesetzt haben, so wird dies beispielsweise ebenfalls mittels der Signalübertragungsverbindung zwischen einer Energiespeicherelektronik des Fremd-Energiespeichers auf der einen Seite und der Steuerung 10 auf der anderen Seite mittels der Steuerung 10 automatisch erkannt. Aufgrund der automatischen Erkennung des in die Energiespeicheraufnahme 4 eingesetzten Energiespeichers als Fremd-Energiespeicher werden das Sauggebläse 8 und die Anzeigeeinheit 9 des Staubsaugers 2 mittels der Steuerung 10 jeweils in einem Sonderbetriebszustand angesteuert. Beispielsweise wird auf der Anzeigeeinheit 9 alternativ oder zusätzlich zu den Betriebsparametern des Staubsaugers 2 angezeigt, dass kein ordnungsgemäßer Energiespeicher, also kein Eigen-Energiespeicher 6, in die Energiespeicheraufnahme 4 eingesetzt worden ist. Das Sauggebläse 8 wird beispielsweise lediglich mit einer stark reduzierten Leistung betrieben.

Alternativ dazu kann es in einer anderen Ausführungsform vorgesehen sein, dass in Abhängigkeit der Erkennung des in die Energiespeicheraufnahme eingesetzten Energiespeichers als Fremd-Energiespeicher mindestens eine der mindestens einen elektrischen Vorrichtung mittels der Steuerung nicht angesteuert wird. Beispielsweise könnte bei dem vorliegenden Ausführungsbeispiel lediglich die Anzeigeeinheit 9 wie oben erläutert mittels der Steuerung 10 angesteuert werden, während das Sauggebläse 8 als sicherheitskritisches Bauteil des Staubsaugers 2 mittels der Steuerung 10 nicht angesteuert und damit nicht betrieben wird.

Die Erfindung ist nicht auf das vorliegende Ausführungsbeispiel begrenzt. Beispielsweise ist die Erfindung auch bei anderen Haushaltsgeräten vorteilhaft einsetzbar.

Entsprechend ist die mindestens eine Haushaltsgerätefunktion und die dazu korrespondierende mindestens eine elektrische Vorrichtung des erfindungsgemäßen Haushaltsgeräts zur Durchführung der mindestens einen Haushaltsgerätefunktion in weiten geeigneten Grenzen frei wählbar. Somit ist eine Vielzahl von voneinander verschiedenen Haushaltsgeräten, Haushaltsgerätefunktionen und Verfahren für den Betrieb der Haushaltsgeräte denkbar, bei denen die Erfindung vorteilhaft einsetzbar ist.

Die Signalübertragung zwischen der Energiespeicherelektronik des in die Energiespeicheraufnahme eingesetzten Eigen-Energiespeichers oder Fremd-Energiespeichers auf der einen Seite und der Steuerung auf der anderen Seite kann auch verschlüsselt erfolgen.

Sollte der in die Energiespeicheraufnahme eingesetzte Eigen-Energiespeicher und/oder Fremd-Energiespeicher keine Energiespeicherelektronik aufweisen, so sind dem Fachmann andere Möglichkeiten einer automatischen Erkennung eines in die Energiespeicheraufnahme eingesetzten Eigen-Energiespeichers oder Fremd-Energiespeichers bekannt. Entsprechend kann das erfindungsgemäße Haushaltsgerät über mehrere Arten der automatischen Erkennung von Eigen-Energiespeichern oder Fremd-Energiespeichern verfügen.

## Patentansprüche

1. Haushaltsgerät (2), umfassend eine Energiespeicheraufnahme (4) zur Aufnahme eines wechselbaren Energiespeichers (6), mindestens eine mit einem in die Energiespeicheraufnahme (4) eingesetzten Eigen-Energiespeicher (6) energieübertragend verbundene elektrische Vorrichtung (8, 9) zur Durchführung mindestens einer Haushaltsgerätefunktion und eine Steuerung (10) zur Ansteuerung der elektrischen Vorrichtung (8, 9) zur Durchführung der Haushaltsgerätefunktion, wobei die Steuerung (10) mit einem in die Energiespeicheraufnahme (4) eingesetzten Energiespeicher (6) und der elektrischen Vorrichtung (8, 9) jeweils in Signalübertragungsverbindung steht, **dadurch gekennzeichnet, dass** die Steuerung (10) derart ausgebildet und eingerichtet ist, dass mittels der Steuerung (10) ein in die Energiespeicheraufnahme (4) eingesetzter Energiespeicher (6) automatisch als ein Eigen-Energiespeicher (6) oder als ein Fremd-Energiespeicher erkennbar ist und in Abhängigkeit dieser Erkennung die mindestens eine elektrische Vorrichtung (8, 9) mittels der Steuerung (10) zur Durchführung der mindestens einen Haushaltsgerätefunktion ansteuerbar ist, wobei in Abhängigkeit der Erkennung eines in die Energiespeicheraufnahme (4) eingesetzten Energiespeichers (6) als Eigen-Energiespeicher (6) die mindestens eine elektrische Vorrichtung (8, 9) mittels der Steuerung (10) in einem Normalbetriebszustand angesteuert wird und in Abhängigkeit der Erkennung eines in die Energiespeicheraufnahme (4) eingesetzten Energiespeichers als Fremd-Energiespeicher mindestens eine der mindestens einen elektrischen Vorrichtung (8) mittels der Steuerung (10) in einem Sonderbetriebszustand angesteuert wird, wobei die elektrische Vorrichtung (8) in deren Sonderbetriebszustand die Haushaltsgerätefunktion eingeschränkt durchführt.

2. Haushaltsgerät (2) nach Anspruch 1, **dadurch gekennzeichnet, dass** der Eigen-Energiespeicher (6) eine Energiespeicherelektronik (12) aufweist, wobei die Steuerung (10) und die Energiespeicherelektronik (12) derart aufeinander abgestimmt ausgebildet und eingerichtet sind, dass die Erkennung des Eigen-Energiespeichers (6) in Abhängigkeit einer Signalübertragung zwischen der Energiespeicherelektronik (12) und der Steuerung (10) erfolgt.

3. Haushaltsgerät (2) nach Anspruch 1 oder 2, **dadurch gekennzeichnet, dass** der Eigen-Energiespeicher (6) als ein wiederaufladbarer Energiespeicher ausgebildet ist.

4. Haushaltsgerät (2) nach Anspruch 1, 2 oder 3, **dadurch gekennzeichnet, dass** in Abhängigkeit der Erkennung eines in die Energiespeicheraufnahme eingesetzten Energiespeichers als Fremd-Energiespeicher mindestens eine der mindestens einen elektrischen Vorrichtung mittels der Steuerung nicht angesteuert wird.

5. Verfahren für den Betrieb eines Haushaltsgeräts (2) umfassend eine Energiespeicheraufnahme (4) zur Aufnahme eines wechselbaren Energiespeichers (6), mindestens eine mit einem in die Energiespeicheraufnahme (4) eingesetzten Eigen-Energiespeicher (6) energieübertragend verbundene elektrische Vorrichtung (8, 9) zur Durchführung mindestens einer Haushaltsgerätefunktion und eine Steuerung (10) zur Ansteuerung der elektrischen Vorrichtung (8, 9) zur Durchführung der Haushaltsgerätefunktion, wobei die Steuerung (10) mit einem in die Energiespeicheraufnahme (4) eingesetzten Energiespeicher (6) und der elektrischen Vorrichtung (8, 9) jeweils in Signalübertragungsverbindung steht, **dadurch gekennzeichnet, dass** die Steuerung (10) derart ausgebildet und eingerichtet ist, dass mittels der Steuerung (10) ein in die Energiespeicheraufnahme (4) eingesetzter Energiespeicher (6) automatisch als ein Eigen-Energiespeicher (6) oder als ein Fremd-Energiespeicher erkennbar ist und in Abhängigkeit dieser Erkennung die mindestens eine elektrische Vorrichtung (8, 9) mittels der Steuerung (10) zur Durchführung der mindestens einen Haushaltsgerätefunktion ansteuerbar ist, wobei ein in die Energiespeicheraufnahme (4) eingesetzter Energiespeicher (6) mittels der Steuerung (10) automatisch als ein Eigen-Energiespeicher (6) oder als ein Fremd-Energiespeicher erkannt wird und in Abhängigkeit dieser Erkennung die mindestens eine elektrische Vorrichtung (8, 9) mittels der Steuerung (10) zur Durchführung mindestens einer der Haushaltsgerätefunktion angesteuert wird, **dadurch gekennzeichnet, dass** in Abhängigkeit der Erkennung eines in die Energiespeicheraufnahme (4) eingesetzten Energiespeichers (6) als Eigen-Energiespeicher (6) die mindestens eine elektrische Vorrichtung (8, 9) mittels der Steuerung (10) in einem Normalbetriebszustand angesteuert wird und in Abhängigkeit der Erkennung eines in die Energiespeicheraufnahme (4) eingesetzten Energiespeichers als Fremd-Energiespeicher mindestens eine der mindestens einen elektrischen Vorrichtung (8) mittels der Steuerung (10) in einem Sonderbetriebszustand angesteuert wird, wobei die elektrische Vorrichtung (8) in deren Sonderbetriebszustand die Haushaltsgerätefunktion eingeschränkt durchführt.

6. Verfahren nach Anspruch 5, **dadurch gekennzeichnet, dass** der Eigen-Energiespeicher (6) eine Energiespeicherelektronik (12) aufweist und die Erkennung des Eigen-Energiespeichers (6) in Abhängigkeit einer Signalübertragung zwischen der Energiespeicherelektronik (12) und der Steuerung (10) erfolgt.

7. Verfahren nach Anspruch 5 oder 6, **dadurch gekennzeichnet, dass** in Abhängigkeit der Erkennung eines in die Energiespeicheraufnahme eingesetzten Energiespeichers als Fremd-Energiespeicher mindestens eine der mindestens einen elektrischen Vorrichtung mittels der Steuerung nicht angesteuert wird.
